Europäisches Patentamt

European Patent Office

Office européen des brevets

(19)

(11) Publication number: **0 070 556**
**B1**

(12) **EUROPEAN PATENT SPECIFICATION**

(45) Date of publication of patent specification: **05.11.86**

(21) Application number: **82106520.8**

(22) Date of filing: **20.07.82**

(51) Int. Cl.⁴: **G 11 B 17/02,** G 11 B 17/04,
G 11 B 19/00

(54) Disc rotating apparatus.

(30) Priority: **20.07.81 JP 113248/81**

(43) Date of publication of application:
**26.01.83 Bulletin 83/04**

(45) Publication of the grant of the patent:
**05.11.86 Bulletin 86/45**

(84) Designated Contracting States:
**DE FR GB NL**

(56) References cited:
**DE-A-2 736 187**
**DE-A-2 909 099**
**FR-A-2 252 625**
**FR-A-2 304 136**
**JP-A-53 149 011**
**US-A-3 768 815**
**US-A-3 891 796**

(73) Proprietor: **Kabushiki Kaisha Toshiba
72, Horikawa-cho Saiwai-ku
Kawasaki-shi Kanagawa-ken 210 (JP)**

(72) Inventor: **Morinaga, Kaoru
1400-76, Kamigou-cho Totsuka-ku
Yokohama-shi Kanagawa-ken (JP)**

(74) Representative: **Blumbach Weser Bergen
Kramer Zwirner Hoffmann Patentanwälte
Radeckestrasse 43
D-8000 München 60 (DE)**

## Description

This invention relates to a disc rotating apparatus and more particularly to a mechanism for rotating a disc such as a phonograph record disc, a video record disc, a digital audio record disc or a magnetic record disc received on a turntable by clamping the disc firmly to the turntable.

Recently, PCM (Pulse Code Modulation) technique has developed enormously and has been applied to a recording or reproducing system for both video and audio discs. A PCM signal recording to or from the discs is effected optically or electrostatically.

In reproducing the PCM signal from the discs, optical or electrostatic pickups are used to trace the recorded track of the disc which is rotated at a very high speed.

It is necessary for the rotation of the disc to precisely follow the rotation of the turntable, although the turntable rotation speed varies in accordance with a rotation speed control signal extracted from the reproduced PCM signal.

It is therefore desirable for a disc rotating apparatus to not only support a disc firmly on a turntable during disc operation but to also allow easy removal of the disc from the turntable after operation of the disc.

Some conventional disc rotating apparatuses have been used. One of them has a clamp biased towards the turntable by a spring. The clamp presses the disc against the turntable during operation of the disc, since the clamp itself is urged towards the turntable by the spring. This, however, causes friction between the clamp and the spring so that a strong driving power is needed to rotate the disc. Moreover, the clamp also suffers from the problem that wow and flutter characteristics of turntable rotation becomes worse due to the friction between the clamp and the spring which badly affects rotation speed control.

Another apparatus has a clamp with a permanent magnet. The permanent magnet and the turntable made of magnetic substance attract each other with the disc located there between. This, however, causes a problem, as it is very difficult to remove the disc from the turntable because of the clamp and the permanent magnet continuing to be attracted by the turntable. Moreover, these is the shortcoming that the material for the turntable is limited to magnetic substances.

The document DE—A—27 36 187 discloses an apparatus for rotating a disc to be played back having a turntable adapted to receive said disc, motor means for rotating the turntable and clamping means movable between a first position for clamping the disc between the clamping means and the turntable, and a second position for releasing the disc. The clamping means includes plunger means and holder means adapted to slide along and rotate around its axis. Magnetic propelling means with a permanent magnet are used for propelling the plunger means towards the disc received on the turntable. The permanent magnet is ring-shaped and disposed in the centering spindle of the turntable. The permanent magnet cooperates with a soft iron plate mounted on the plunger means.

The document JP—A—53-149011 discloses a clamping means for a disc rotating apparatus having a structure similar to that of the aforementioned prior art. However, in this case the clamping means contains two permanent magnets, one fixed to the holder means holding the plunger means and the other fixed to the plunger means. The repulsive force between the two permanent magnets is used to establish a bias force between said holder means and said plunger means.

It is an object of the present invention to provide a disc rotating apparatus for rotating a disc while clamping the disc firmly with little friction and allowing easy removal of a disc from a turntable after operation of the disc.

A further object of the present invention is to provide a disc rotating apparatus for rotating a disc received on a turntable directly by means of a motor contained in a clamping means.

These objects are achieved with an apparatus as claimed.

Ways of carrying out the invention are described in detail below with reference to drawings which illustrate only specific embodiments, in which:

Fig. 1 is a perspective view of a digital audio disc player adapted to a disc rotating apparatus according to the present invention;

Fig. 2 is an exploded view of the disc rotating apparatus extracted from the digital audio disc player in Fig. 1;

Figs. 3a, 3b are longitudinal sectional views of the disc rotating apparatus according to the present invention in an ejected and a locked condition of the carriage;

Fig. 4a is a perspective view of a magnetic propelling means extracted from the disc rotating apparatus in Figs. 3a, 3b;

Fig. 4b are illustrative developments of a motor system extracted from the magnetic propelling means in Fig. 4a;

Fig. 5 is a principal circuit diagram of a conventional circuit producing a revolving magnetic field;

Figs. 6a, 6b are transverse sectional views of another embodiment of a disc rotating apparatus according to the present invention in a non-operative and in an operative condition, respectively, of a disc.

The same reference numerals will be used throughout the drawings to designate the same or equivalent parts for the sake of simplicity.

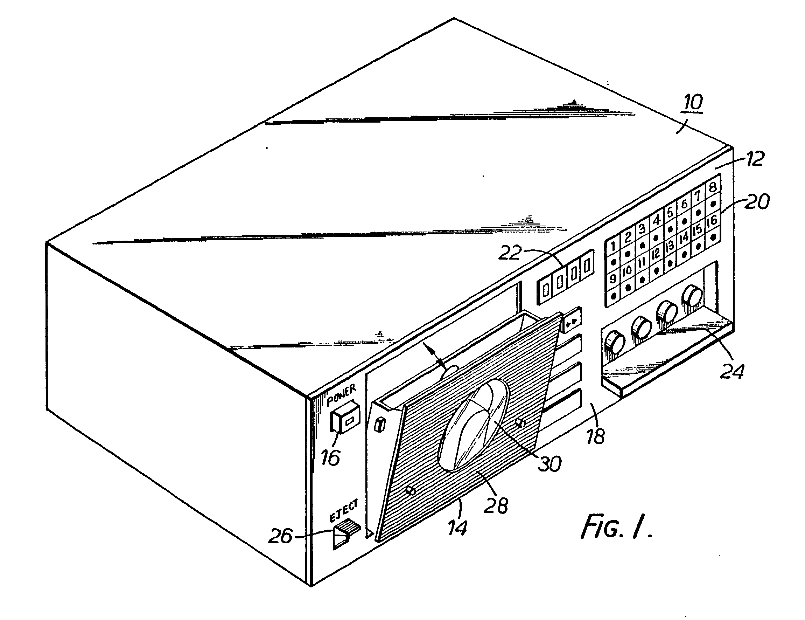

Fig. 1 shows a perspective view of a digital audio disc player to which a disc rotating apparatus of the present invention is adapted. As shown in Fig. 1, casing 10 of the disc player has on its front side a control panel 12 and a carriage 14, part of the disc rotating apparatus. Control panel 12 is provided with power switch button 16, disc drive control section 18, program selector section 20 for selectively reproducing any program recorded on a disc, reproducing time display 22, reproduced signal adjusting section 24 and ejecting button 26 for carriage 14.

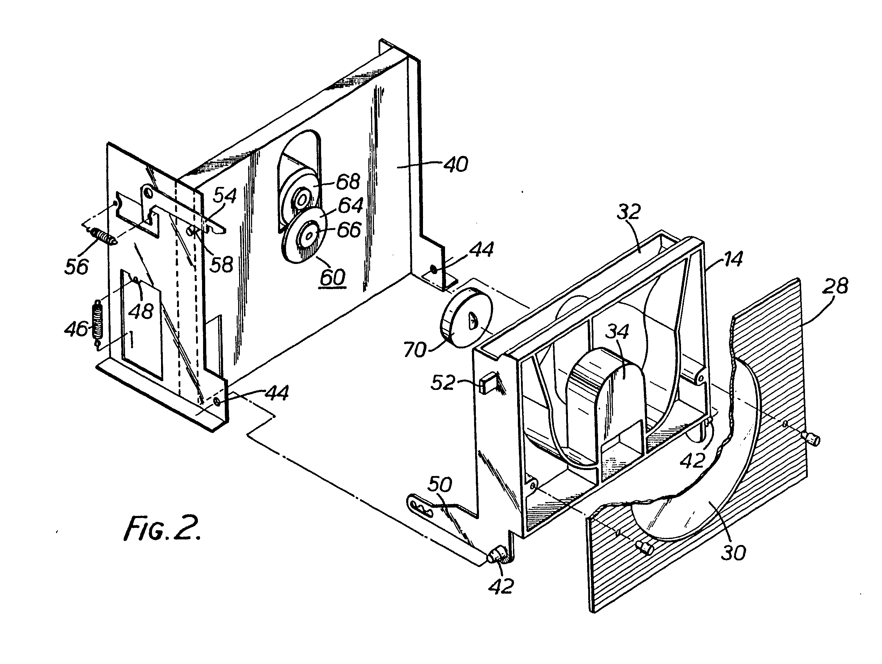

Carriage 14 has a thin box-like configuration and is covered at the front by cover 28 as shown in Fig. 2. Cover 28 has a transparent window 30 for showing the interior of the carriage 14. Carriage 14 has a disc carrying portion 32 open at its upper end like a slot and clamper housing portion 34 adjacent to disc carrying portion 32 at the center of carriage 14.

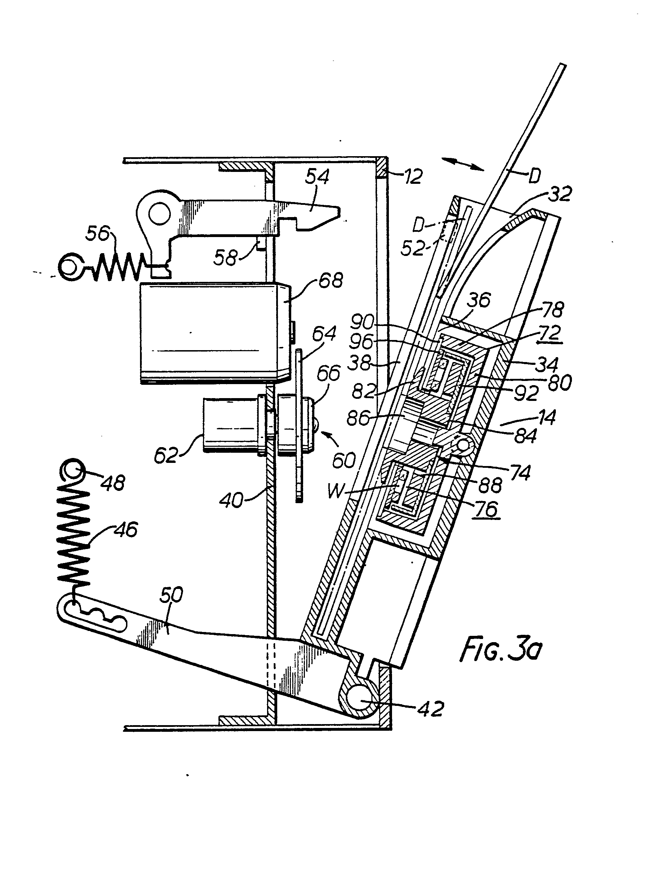

Disc carrying portion 32 is formed with two openings 36, 38 (Fig. 3a, b). One opening 36 is formed on one side of disc carrying portion 32 adjacent to clamper housing portion 34 for the purpose of connecting both cavities of disc carrying portion 32 and clamper housing portion 34 with one another. The other opening 38 is formed on the other side of disc carrying portion 32 opposite to opening 36.

Carriage 14 is rockably mounted on chassis 40 by means of pins 42, 42 both of which protrude laterally from opposite sides of carriage 14 and penetrate holes 44, 44 of chassis 40 (Fig. 2). Carriage 14 is urged to an ejected position by spring 46 suspended between pin 48 protruding from chassis 40 and lever portion 50 extending from carriage 14 as shown in Figs. 3a, 3b. Carriage 14, on the other hand is comprised of pin 52 protruding from one side of carriage 14. Pin 52 is capable of being engaged with latch 54 rockably mounted on chassis 40. Latch 54 is biased by spring 56 in the clockwise direction in Figs. 3a, 3b. Latch 54 is also capable of being rocked counterclockwise by ejecting member 58 associated with ejecting button 26 on control panel 12. Figs. 3a, 3b show the condition in which carriage 14 is rocked in its ejected position by spring 46 and fastened in its operative position by latch 54, respectively.

There is provided a turntable 60 opposite to clamper housing portion 34 of carriage 14. Turntable 60 is rotatably mounted on chassis 40 by means of a bearing 62 secured to chassis 40 as shown in Figs. 3a, 3b. Turntable 60 comprises disc table 64 and center spindle 66. Disc table 64 is adapted to support an inner non-recorded portion of disc D. Center spindle 66 is adapted to fit in a center hole of disc D. An optical pickup 68 is provided adjacent to turntable 60 for tracing a recorded track of disc D during a rotation of said disc.

Carriage 14 is provided with a clamper 70 swingably mounted in clamper housing portion 34 of carriage 14. Clamper 70 comprises holder 72, plunger 74 and magnetic propelling means 76. Holder 72 has a tubular wall portion 78 and bottom wall portion 80 closing one end of tubular wall portion 78. Plunger 74 has a head portion 82 and body portion 84. Body portion 84 of plunger 74 is adapted to slide along one axis of plunger 74 and rotate about the axis. Head portion 82 of plunger 74 defines a recess 86 adapted to fit the center spindle 66 of turntable 60. Magnetic propelling means 76 comprises an annular permanent magnet 88 and an annular plate 90 made of a magnetic substance, e.g. iron. Magnet 88 is supported on the inner end of body portion 84 of plunger 74 by means of yoke 92. Plunger 74 is thus always urged towards turntable 60 by the attraction between magnet 88 and iron plate 90.

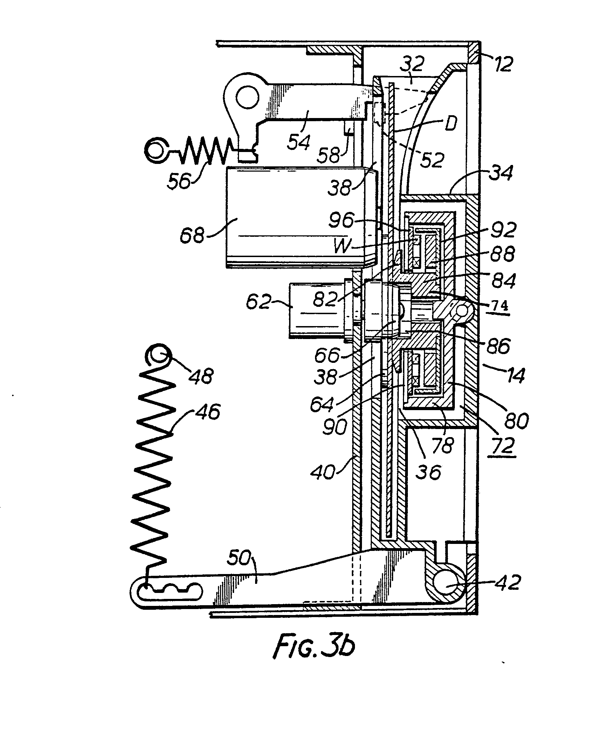

Furthermore, a revolving magnetic field producing circuit block 94 (Fig. 4a) is provided on iron plate 90. Circuit block 94 forms a conventional permanent magnet motor system together with magnet 88. That is, circuit block 94 has for example four coils $W_1$ to $W_4$, two Hall elements $H_1$, $H_2$ and a printed circuit board 96. Printed circuit board 96 is mounted on iron plate 90 and supports coils $W_1$ to $W_4$ and Hall elements $H_1$, $H_2$ in their proper positions as shown in Fig. 4a. Printed circuit board 96 also connects coils $W_1$ to $W_4$ to Hall elements $H_1$, $H_2$ to one another and then in turn connects them to outside circuit elements (not shown). Four coils $W_1$ to $W_4$ and Hall elements $H_1$, $H_2$ face towards annular permanent magnet 88, and magnet 88 is circumferentially polarized in four north pole zones $N_1$ to $N_4$ and four south pole zones $S_1$ to $S_4$.

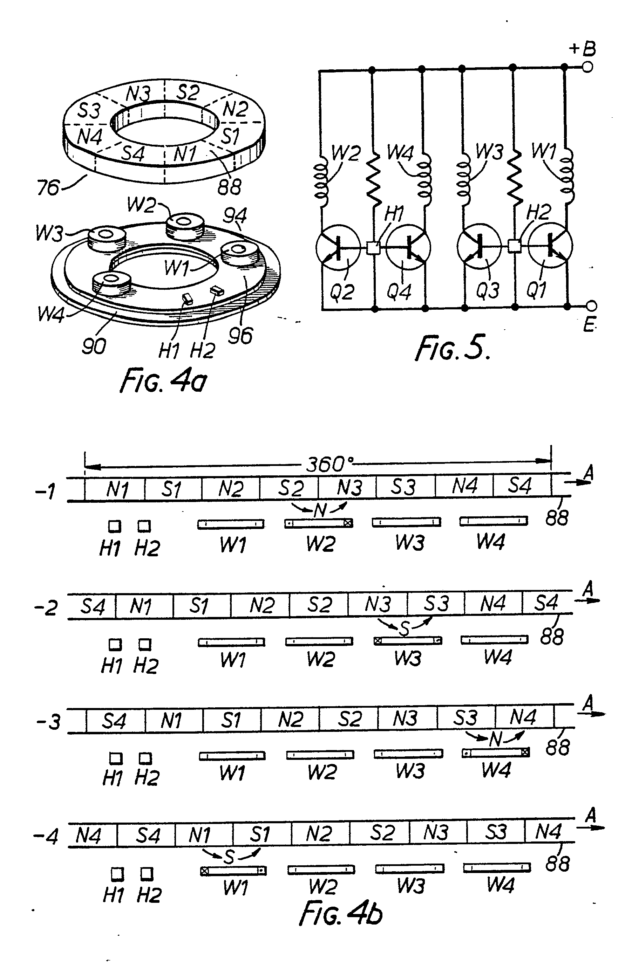

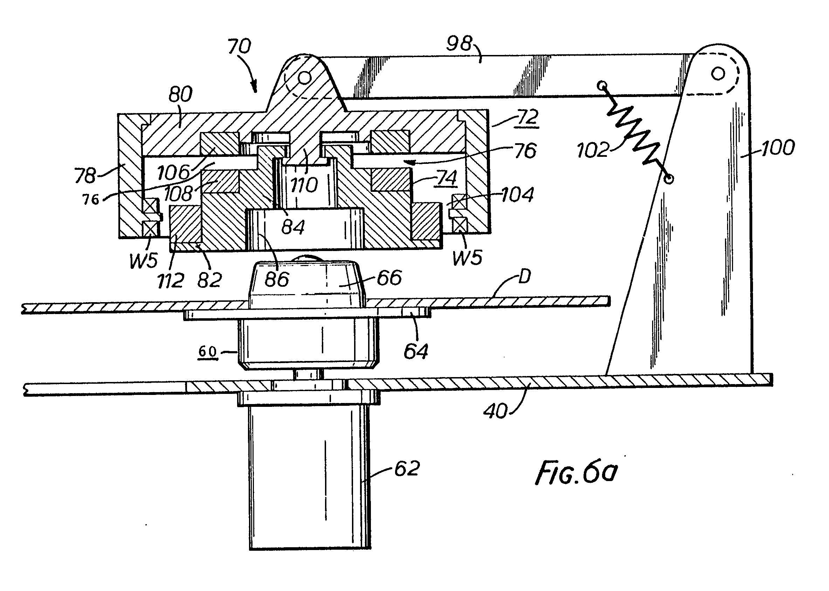

North and south pole zones $N_1$ to $N_4$ and $S_1$ to $S_4$ are associated with four coils $W_1$ to $W_4$ and two Hall elements $H_1$, $H_2$ as shown in Fig. 4b. Coils $W_1$ to $W_4$ and Hall elements $H_1$, $H_2$ are connected to one another through switching transistors $Q_1$ to $Q_4$ of the outside circuit as shown in Fig. 5. When Hall element $H_1$ is facing the north pole zone $N_1$ as shown in Fig. 4b-1, Hall element $H_1$ turns transistor $Q_2$ on. Then coil $W_2$, which faces around a border between south pole zone $S_2$ and north pole zone $N_3$, is so excited that its upper end adjacent to magnet 88 constitutes a north pole. Coil $W_2$, therefore, attracts south pole zone $S_2$ and repels north pole zone $N_3$ so that magnet 88 is driven in the direction of arrow A. When south pole zone $S_2$ has moved in position facing coil $W_2$ as shown in Fig. 4b-2, Hall element $H_2$ faces the north pole zone $N_1$ and turns transistor $Q_3$ on, but fails to turn transistor $Q_2$ on. Then coil $W_3$, which faces around a border between north pole zone $N_3$ and south pole zone $S_3$, is so excited that its upper end constitutes a south pole. Coil $W_3$, therefor, attracts, north pole zone $N_3$ and expels south pole zone $S_3$ so that magnet 88 is successively driven in the direction of arrow A. In the same manner, coils $W_4$, $W_1$ are excited in turn and serve to drive magnet 88 in the direction of A as shown in Figs. 4b-3, 4b-4.

Prior to reproduction of disc D, the disc is loaded in disc carrying portion 32 of carriage 14 through an upper opening of disc carrying portion 32 as shown in Fig. 3a. Then carriage 14 is manually rocked against spring 46 and locked in its operating position by latch 54 as shown in Fig. 3b. Disc D is clamped by plunger 74 and turntable 60 both entering into disc carrying portion 32 of carriage 14 through openings 36, 38 of disc carrying portion 32. In this condition, center spindle 66 of turntable 60 penetrates the center hole of disc D and enters into recess 86 of head portion 82 of plunger 74. Disc table 64 is attached to the inner non-recorded portion of disc D. On the other hand, head portion 82 of plunger 74 is attached to the other side of disc D opposing disc table 64.

Hereinabove, plunger 74 is able to firmly clamp disc D in cooperation with turntable 60 by the magnetic attraction between annular permanent magnet 88 and iron plate 90. In this clamping condition (Fig. 3a), the body portion 84 of plunger 74 is pushed back into holder 72. This causes plunger 74 to be detached from any portion of holder 72. Plunger 74, therefore, is able to rotate disc D free from mechanical friction between holder 72 and plunger 74.

In the locked condition of carriage 14 described above holder 72 is always urged away from turntable 60 by not only spring 56 but also by the attraction between magnet 88 and iron plate 90. Carriage 14 is therefore easily ejected to its ejected position when latch 54 is removed by ejecting member 58 as shown in Fig. 3a.

While carriage 14 is being ejected in the position shown in Fig. 3a, annular permanent magnet 88 on plunger 74 is drawn to iron plate 90 on holder 72 by the magnetic attraction thereof. However, annular permanent magnet 88 is prevented from hitting coils $W_1$ to $W_4$ or Hall elements $H_1$, $H_2$ due to the yoke 92 which touches at its end extending along tubular wall portion 78 of holder 72 printed circuit board 96. Hence, a magnetic gap of the thickness of the printed circuit board 96 exists between the end of yoke 92 and iron plate 90. Due to this magnetic gap plunger 74 is able to be easily pushed back into holder 72 by turntable 60 when carriage 14 is rocked to its operative condition. On the other hand, the magnetic attraction or the pressure of plunger 74 on disc D during the operative condition is maintained in a proper magnitude due to the narrowness of the said magnetic gap in spite of the fact that annular permanent magnet 88 and iron plate 90 are separated by printed circuit board 96 and coils $W_1$ to $W_4$ or Hall elements $H_1$, $H_2$.

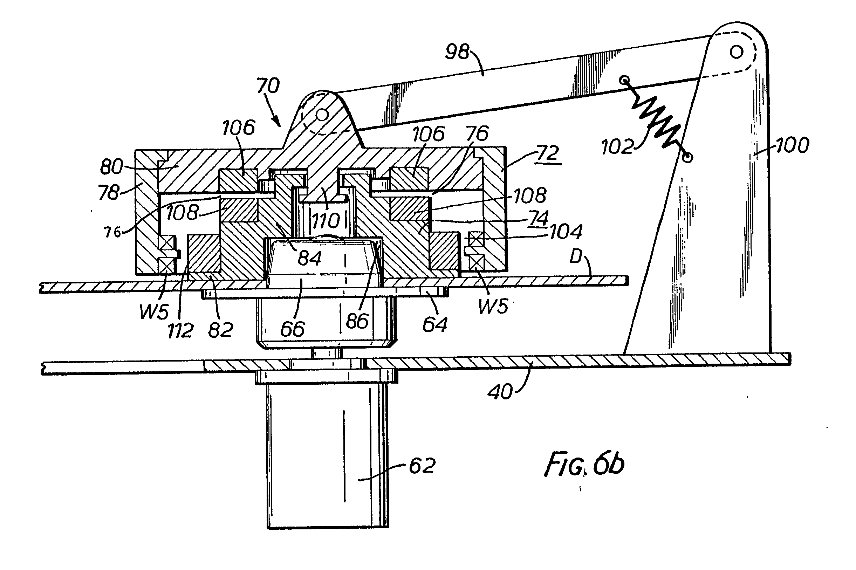

Figs. 6a, 6b illustrate another embodiment of the present invention. Turntable 60 has its surface horizontally located and is adapted to receive disc D on its upper surface. In the position above turntable 60, clamper 70 is suspended from one end of lever 98 whose other end is pivoted on post 100 which protrudes from chassis 40. Clamper 70 is normally pressed against turntable 60 by its own weight and spring 102 which is suspended between lever 98 and post 100 as shown in Fig. 6a. Clamper 70 comprises holder 72, magnetic propelling means 76 and motor system 104. Plunger 74 is loosely held in holder 72. Magnetic propelling means 76 comprises two annular permanent magnets 106, 108, respectively fixed on holder 72 and plunger 74. The permanent magnets 106, 108 are arranged with one magnetic pole of one permanent magnet facing the same magnetic pole of the other permanent magnet. The plunger is therefore urged towards turntable 60 by repulsion between the two permanent magnets, 106, 108. When plunger 74 is being pulled away from turntable 60, plunger 74 hangs on support pin 110 protruding downwardly from the center of the holder 72 along an axis of holder 72 as shown in Fig. 6a. But plunger 74 is free from any portion of holder 72 while clamper 70 clamps disc D in co-operation with turntable 60 as shown in Fig. 6b similar to the first embodiment shown in Fig. 3b.

Furthermore, motor system 104 is a conventional permanent magnet motor disposed between holder 72 and plunger 74. Stator coils $W_5$, $W_5$ of motor system 104 are mounted on the inner surface of tubular wall portion 78 of holder 72. Annular rotor magnet 112 of motor system 104 is mounted on plunger 74 opposite the stator coils $W_5$, $W_5$, and is polarized like annular permanent magnet 88 of the first embodiment. Accordingly, rotor magnet 112 and plunger 74 are able to rotate in accordance with the revolving magnetic field produced by stator coils $W_5$, $W_5$ similar to the motor system shown in Fig. 4b.

Rotor magnet 112 is shifted slightly from a correct position facing stator coils $W_5$, $W_5$ by the repulsion between the two magnets 106, 108 while clamper 70 is pulled away from turntable 60 as shown in Fig. 6A. But rotor magnet 112 is held in position facing around the center of coils $W_5$, $W_5$ against the repulsion while clamper 70 clamps disc D in cooperation with turntable 60 as shown in Fig. 6b.

In the embodiments described above a weight may be used instead of spring 46 (Fig. 3a, 3b) to urge carriage 14 into its non-operative second position.

**Claims**

1. Apparatus for rotating a disc (D), said apparatus comprising:
   a turntable (60) adapted to receive said disc (D);
   clamping means (70) for clamping said disc (D) received on said turntable in cooperation with said turntable; and
   an electric motor (94, 104) to rotate the disc (D);
   wherein the clamping means (70) are movable between a first position for clamping the disc (D) between the clamping means (70) and the turntable (60), and a second position for releasing the disc (D), said clamping means (70) including plunger means (74) and holder means (72) for holding the plunger means, the plunger means (74) being adapted to slide along and rotate around its axis, characterized in that
   the electric motor (94, 104) includes an annular permanent magnet (88, 112) secured on said plunger means (74) and a circuit, secured on said holder means (72) and facing said permanent magnet, for producing a revolving magnetic field for driving said permanent magnet together with said plunger means.

2. Apparatus according to claim 1, in which said clamping means (70) further comprises magnetic propelling means (76) for establishing a bias force between the holder means (72) and the plunger means (74) urging the plunger means (74) toward said disc (D).

3. Apparatus according to claim 2, in which said magnetic propelling means (76) uses a permanent magnet (88, 108) which is secured on said plunger means (74) for cooperating with a magnetic body (90, 106) secured to said holder means (72) for propelling the plunger means (73) toward said disc (D) received on said turntable (60).

4. Apparatus according to claim 3, in which said permanent magnet (88) of said magnetic propelling means (76) is used as the permanent magnet of the electric motor driven by said revolving magnetic field.

5. Apparatus according to claim 1, further comprising: means (116) for placing said clamping means (70) in said first position.

6. Apparatus according to claim 5, wherein said placing means is a weight (116) imposed on said clamping means (70).

7. Apparatus according to claim 6, wherein said weight is directly imposed on said clamping means.

8. Apparatus according to claim 6, wherein said weight (116) is imposed on said clamping means via a lever (50) connecting said weight and said clamping means (70).

9. Apparatus according to claim 5, wherein said placing means is a spring means (102) urging said clamping means (70) towards said first position.

10. Apparatus according to any of claims 1 to 9, including a fastener means (52, 54, 56) fastening said clamping means (70) in said first position.

11. Apparatus according to claim 10 further comprising: means for displacing said clamping means from said first position to said second position such that said clamping means (70) is detached from said disc (D) received on said turntable (60).

12. Apparatus according to claim 11, wherein said displacing means is a weight imposed on said clamping means (70).

13. Apparatus according to claim 12, wherein said weight is directly imposed on said clamping means (70).

14. Apparatus according to claim 12, wherein said weight is imposed on said clamping means (70) via a lever connecting said weight and said clamping means.

15. Apparatus according to claim 11, wherein said displacing means is a spring means (46) urging said clamping means (70) towards said second position.

16. Apparatus according to claim 1, further comprising: a carriage means (14) carrying said clamping means and movable between a first position such that said clamping means (70) clamps said disc (D) received on said turntable (60) in cooperation with said turntable, and a second position such that said clamping means is detached from said disc.

17. Apparatus according to claim 16, wherein said clamping means (70) is swingably mounted on said carriage means (14).

18. Apparatus according to claim 16 or 17, in which said carriage means (14) mounts said electric motor and said clamping means (70).

19. Apparatus according to claim 18, or claim 23, wherein said carriage means includes a portion (32) for carrying said disc (D) in a position facing said clamping means (70).

20. Apparatus according to claim 19, wherein said disc carrying portion (32) is a portion defining a slot for receiving said disc (D).

21. Apparatus according to claim 20, wherein said disc carrying portion (32) further defines openings (36, 38) to accommodate said turntable (60) and said clamping means (70) in said disc carrying portion.

**Patentansprüche**

1. Vorrichtung zum Drehen einer Platte (D), umfassend:
— eine Plattenteller (60) zur Aufnahme der Platte (D),
— ein Klemmeinrichtung (70) zum Klemmen der auf dem Plattenteller aufgenommenen Platte in Zusammenwirkung mit dem Plattenteller und
— einen elektrischen Motor (94, 104) zum Drehen der Platte (D),
wobei die Klemmeinrichtung (70) zwischen einer ersten Stellung zum Klemmen der Platte (D) zwischen der Klemmeinrichtung (70) und dem Plattenteller (60) und einer zweiten Stellung zur Freigabe der Platte (D) beweglich ist und die Klemmeinrichtung (70) eine Tauchkolbeneinrichtung (74) und eine diese haltende Halteeinrichtung (72) enthält, wobei die Tauchkolbeneinrichtung (74) axial verschiebbar und um ihre Achse drehbar ist,
dadurch gekennzeichnet,
daß der elektrische Motor (94, 104) einen ringförmigen Dauermagnet (88, 112), der an der Tauchkolbeneinrichtung (74) befestigt ist, und eine an der Halteeinrichtung (72) befestigte und dem Dauermagnet zugewandte Schaltung zur Erzeugung eines Drehmagnetfeldes zum Antrieb des Dauermagneten zusammen mit der Tauchkolbeneinrichtung enthält.

2. Vorrichtung nach Anspruch 1, bei der die Klemmeinrichtung (70) ferner eine magnetische Vortreibeinrichtung (76) zum Aufbringen einer Vorspannkraft zwischen der Halteeinrichtung (72) und der Tauchkolbeneinrichtung (74) aufweist, die die Tauchkolbeneinrichtung (74) in Richtung auf die Platte (D) drückt.

3. Vorrichtung nach Anspruch 2, bei der die magnetische Vortreibeinrichtung (76) einen Dauermagnet (88, 108), der an der Tauchkolbeneinrichtung (74) befestigt ist, in Zusammenwirkung mit einem magnetischen Körper (90, 106), verwendet, der an der Halteeinrichtung (72) befestigt ist, um die Tauchkolbeneinrichtung (74) in Richtung auf die auf dem Plattenteller (60) aufgenommene Platte (D) vorzutreiben.

4. Vorrichtung nach Anspruch 3, bei der der Dauermagnet (88) der magnetischen Vortreibeinrichtung (76) als der von dem Drehmagnetfeld angetriebene Dauermagnet des elektrischen Motors verwendet wird.

5. Vorrichtung nach Anspruch 1, ferner umfassend: eine Einrichtung (116), durch die die Klemmeinrichtung (70) in die erste Stellung einstellbar ist.

6. Vorrichtung nach Anspruch 5, bei der die Einstelleinrichtung ein auf die Klemmeinrichtung (70) einwirkendes Gewicht (116) ist.

7. Vorrichtung nach Anspruch 6, bei der das Gewicht direkt auf die Klemmeinrichtung einwirkt.

8. Vorrichtung nach Anspruch 6, bei der das Gewicht (116) über einen das Gewicht mit der Klemmeinrichtung (70) verbindenden Hebel (50) auf die Klemmeinrichtung einwirkt.

9. Vorrichtung nach Anspruch 5, bei der die Einstelleinrichtung eine Federeinrichtung (102) ist, die die Klemmeinrichtung (70) in Richtung auf die erste Stellung drückt.

10. Vorrichtung nach einem der Ansprüche 1 bis 9, umfassend eine Arretiereinrichtung (52, 54, 56) zum Arretieren der Klemmeinrichtung (70) in der ersten Stellung.

11. Vorrichtung nach Anspruch 10, ferner umfassend: eine Einrichtung zur Verstellung der Klemmeinrichtung aus der ersten Stellung in die zweite Stellung derart, daß die Klemmeinrichtung (70) von der auf dem Plattenteller (60) aufgenommenen Platte (D) abgenommen wird.

12. Vorrichtung nach Anspruch 11, bei der die Verstelleinrichtung ein auf die Klemmeinrichtung (70) einwirkendes Gewicht ist.

13. Vorrichtung nach Anspruch 12, bei der das Gewicht direkt auf die Klemmeinrichtung (70) einwirkt.

14. Vorrichtung nach Anspruch 12, bei der das Gewicht über einen das Gewicht mit der Klemmeinrichtung verbindenden Hebel auf die Klemmeinrichtung (70) einwirkt.

15. Vorrichtung nach Anspruch 11, bei der die Verstelleinrichtung eine Federeinrichtung (46) ist, die die Klemmeinrichtung (70) in Richtung auf die zweite Stellung drückt.

16. Vorrichtung nach Anspruch 1, ferner umfassend: eine Schlitteneinrichtung (14), die die Klemmeinrichtung trägt und zwischen einer ersten Stellung und einer zweiten Stellung beweglich ist derart, daß in der ersten Stellung die Klemmeinrichtung (70) die auf dem Plattenteller (60) aufgenommene Platte (D) in Zusammenwirkung mit der Plattenteller klemmt und in der zweiten Stellung die Klemmeinrichtung von der Platte abgenommen ist.

17. Vorrichtung nach Anspruch 16, bei der die Klemmeinrichtung (70) schwenkbar auf der Schlitteneinrichtung (14) montiert ist.

18. Vorrichtung nach Anspruch 16 oder 17, bei der der elektrische Motor und der Klemmeinrichtung (70) an der Schlitteneinrichtung (14) montiert sind.

19. Vorrichtung nach Anspruch 18, bei der die Schlitteneinrichtung ein Teil (32) zum Tragen der Platte (D) in einer der Klemmeinrichtung (70) zugewandten Stellung aufweist.

20. Vorrichtung nach Anspruch 19, bei der das Plattentrageteil (32) ein einen Schlitz zur Aufnahme der Platte (D) bildendes Teil ist.

21. Vorrichtung nach Anspruch 20, dadurch gekennzeichnet, daß das Plattentrageteil (32) ferner Öffnungen (36, 38) bildet, um den Plattenteller (60) und die Klemmeinrichtung (70) in dem Plattentrageteil aufzunehmen.

**Revendications**

1. Appareil d'entraînement en rotation d'un disque (D), l'appareil comprenant
une platine (60) destinée à porter le disque (D),
un dispositif (70) de serrage du disque (D) porté par la platine, en coopération avec celle-ci, et
un moteur électrique (94, 104) destiné à entraîner le disque (D) en rotation,
le dispositif de serrage (70) étant mobile entre une première position dans laquelle il serre le disque (D) entre lui et la platine (60) et une seconde position de libération du disque (D), le dispositif de serrage (70) comprenant un plongeur (74) et un organe (72) de support du plongeur, le plongeur (74) étant destiné à coulisser le long de son axe et à tourner autour de son axe, caractérisé en ce que
le moteur électrique (94, 104) comporte un aimant permanent annulaire (88, 112) fixé sur le plongeur (74) et un circuit fixé à l'organe de support (72) et tourné vers l'aiment permanent, destiné à créer un champ magnétique tournant d'entraînement de l'aimant permanent avec le plongeur.

2. Appareil selon la revendication 1, dans lequel le dispositif de serrage (70) comporte en outre un dispositif magnétique (76) de propulsion destiné à créer une force de rappel entre l'organe de support (72) et le plongeur (74) et repoussant le plongeur (74) vers le disque (D).

3. Appareil selon la revendication 2, dans lequel le dispositif magnétique (76) de propulsion met en oeuvre un aimant permanent (88, 108) fixé au plongeur (74) et destiné à coopérer avec un corps magnétique (90, 106) fixé à l'organe de support (72) et destiné à projeter le plongeur (74) vers le disque (D) porté par la platine (60).

4. Appareil selon la revendication 3, dans lequel l'aimant permanent (88) du dispositif magnétique (76) de propulsion est utilisé comme aimant permanent du moteur électrique entraîné par le champ magnétique tournant.

5. Appareil selon la revendication 1, comprenant en outre un dispositif (116) destiné à placer le dispositif de serrage (70) dans la première position.

6. Appareil selon la revendication 5, dans lequel le dispositif destiné à placer est une masse (116) disposée sur le dispositif de serrage (70).

7. Appareil selon la revendication 6, dans lequel la masse est directement placée sur le dispositif de serrage.

8. Appareil selon la revendication 6, dans lequel la masse (116) agit sur le dispositif de serrage par l'intermédiaire d'un levier (50) reliant la masse au dispositif de serrage (70).

9. Appareil selon la revendication 5, dans lequel le dispositif destiné à placer est un ressort (102) repoussant le dispositif de serrage (70) vers la première position.

10. Appareil selon l'une quelconque des revendications 1 à 9, comprenant un organe de fixation (52, 54, 56) du dispositif de serrage (70) dans la première position.

11. Appareil selon la revendication 10, comprenant en outre un dispositif destiné à déplacer le dispositif de serrage de sa première position vers sa seconde position de manière que le dispositif de serrage (70) soit détaché du disque (D) porté par la platine (60).

12. Appareil selon la revendication 11, dans lequel le dispositif de déplacement est une masse agissant sur le dispositif de serrage (70).

13. Appareil selon la revendication 12, dans lequel la masse agit directement sur le dispositif de serrage (70).

14. Appareil selon la revendication 12, dans lequel la masse agit sur le dispositif de serrage (70) par l'intermédiaire d'un levier reliant la masse au dispositif de serrage.

15. Appareil selon la revendication 11, dans lequel le dispositif de déplacement est un ressort (46) repoussant le dispositif de serrage (70) vers la seconde position.

16. Appareil selon la revendication 1, comprenant en outre un chariot portant le dispositif de serrage et mobile entre une première position telle que le dispositif de serrage (70) serre le disque (D) porté par la platine (60) en coopération avec la platine, et une seconde position telle que le dispositif de serrage est détaché du disque.

17. Appareil selon la revendication 16, dans lequel le dispositif de serrage (70) est monté sous forme articulée sur le chariot (14).

18. Appareil selon l'une des revendications 16 et 17, dans lequel le chariot (14) porte le moteur électrique et le dispositif de serrage (70).

19. Appareil selon la revendication 18, dans lequel le chariot a une partie (32) destinée à porter le disque (D) en position tournée vers le dispositif de serrage (70).

20. Appareil selon la revendication 19, dans lequel la partie (32) destinée à porter le disque est une partie délimitant une fente de logement du disque (D).

21. Appareil selon la revendication 20, dans lequel la partie (32) destinée à porter le disque délimite en outre des ouvertures (36, 38) destinées au passage de la platine (60) et du dispositif de serrage (70) dans la partie de support de disque.

FIG. 1.

0 070 556

Fig. 2.

28  14  30  42  32  34  40  44  70  52  50  42  68  64  66  60  54  58  48  56  46

Fig.3a

Fig.3b

Fig. 4a

Fig. 5.

Fig. 4b

Fig.6a

FIG. 6b

0 070 556